# EUROPÄISCHE PATENTSCHRIFT

(11) **EP 0 734 194 B1**
(45) Veröffentlichungstag und Bekanntmachung des Hinweises auf die Patenterteilung: **03.11.2004**
(21) Anmeldenummer: 95104216.7
(22) Anmeldetag: 22.03.1995
(51) Int. Cl.: H04Q 7/36

(54) **Funkkommunikationssystem mit zentraler Ausleuchtung durch Sektorantennen**
Radio communications system with central illumination by sector antennae
Réseau de radio-communications avec illumination centrale par antennes sectorielles

(43) Veröffentlichungstag der Anmeldung: 25.09.1996
(73) Patentinhaber: SIEMENS AKTIENGESELLSCHAFT, 80333 München (DE)
(72) Erfinder: Lechner, Robert, A-3171 Böheimkirchen (AT); Mahner, Helmut, D-82049 Pullach (DE)

(56) Entgegenhaltungen:
- EP-A- 0 591 770
- WO-A-93/12586

## Beschreibung

Die Erfindung betrifft ein Fernmeldevermittlungsnetz gemäß dem Oberbegriff des Patentanspruchs 1.

Ein solches Fernmeldenetz umfaßt demnach zumindest in Teilbereichen ein Funkkommunikationssystem, das aus einer zentralen Funkstelle und einer Mehrzahl von in einem Versorgungsgebiet verteilten peripheren Funkstellen besteht. Am Ort der zentralen Funkstelle sind dabei mehrere jeweils nur einen Sektor des Versorgungsgebietes erfassende Antennen angeordnet.

Die Verwendung von Sektorantennen anstelle einer den gesamten Versorgungsbereich erfassenden Antenne führt dazu, daß von den insgesamt zur Verfügung stehenden Funkfrequenzen bzw. den mit ihnen gebildeten Funkkanälen zu einem hohen Prozentsatz mehrfach Gebrauch gemacht werden kann, womit das zur Verfügung stehende Funkfrequenzspektrum besser ausgenutzt ist.

Bei einem bekannten Funkkommunikationssystem dieser Art ist vorgesehen, den einzelnen Sektorantennen je nach Verkehrsaufkommen des jeweiligen Sektors eine bestimmte Mehrzahl von Basisstationen zuzuordnen, die die Schnittstellen zu dem leitungsgebundenen Teil des Funkkommunikationssystems darstellen und jeweils nur einen begrenzten Teil des Verkehrs bewältigen können. Zur Festlegung der Anzahl der Basisstationen muß für jeden Sektor des Versorgungsbereichs das Verkehrsaufkommen geschätzt werden. Wenn dabei die Erfassungssektoren aus den obengenannten Gründen möglichst klein gewählt werden, ist die Anzahl der erforderlichen Basisstationen insgesamt größer als bei der Wahl größerer Erfassungssektoren, wobei zu dem Mehraufwand an Basisstationen noch der Mehrbedarf an Übertragungskapazität zwischen den Basisstationen und der zentralen Systemsteuerung des Funkkommunikationssystems kommt .

Aus der Patentanmeldung EP 0 591 770 A2 ist eine sektorisierte zellulare Funkbasisstationsantenne bekannt, auf die insbesondere die bekannte räumliche Antennendiversity-Technik angewendet wird. Hierbei umfaßt das bekannte Funkbasisstation-Antennen-System mehrere Sende- und Empfangsantennen, die jeweils eine Sende- bzw. Empfangszentralachse aufweisen. Bevorzugt hat jede Empfangsantenne einen Empfangsbereich, der im wesentlichen die Hälfte des Empfangsbereichs jeder benachbarten Empfangsantenne überlappt. Auf diese Weise kann ein von jedem Punkt in der Zelle kommendes Signal klar von zwei Antennen empfangen werden. Darüber hinaus zweiteilt die Zentralachse jeder Empfangsantenne den Winkel zwischen den Zentralachsen zweier benachbarter Sendeantennen. Eine entsprechende Ausgestaltung gilt für jede Sendeantenne in Bezug auf die Empfangsantennen. Durch diese Antennenausgestaltung wird vermieden, daß der Antennendiversity-Mechanismus die beste benachbarte Zweitantenne mit dem besten Funkempfang nach einem Zufallsalgorithmus auswählen muß, wodurch ein Komplexitätsaufwand und Performanzeinbußen beseitigt werden.

Jedoch kann das bekannte Funkbasisstation-Antennen-System das vorstehend erwähnte Problem hinsichtlich der Bewältigung eines starken Verkehrsaufkommens nicht lösen.

Die Aufgabe der Erfindung besteht nun darin, ein Funkkommunikationssystem eines Fernmeldenetzes anzugeben, bei dem das Aufwand-Nutzenverhältnis gegenüber Lösungen der erwähnten bekannten Art verbessert ist.

Diese Aufgabe wird durch ein Funkkommunikationssystem mit Merkmalen gemäß dem Patentanspruch 1 gelöst.

Ein solches erfindungsgemäßes Funkkommunikationssystem kann in bestimmten Grenzen eine Schieflast im Verkehrsaufkommen in einzelnen Teilen des Gesamterfassungsbereichs bewältigen. Es bringt außerdem den Vorteil, daß die peripheren Funkstellen, also die Teilnehmer, zu einem größeren Leitungsbündel Zugang haben als bei üblichen Lösungen, wodurch die Verkehrsverluste verringert werden.

Weitere Ausgestaltungen der Erfindung sind in den Unteransprüchen angegeben.

Die Ausgestaltung gemäß Anspruch 2 betrifft eine vorteilhafte Anordnung der Antennen der zentralen Funkstelle, bei der den Kriterien bezüglich der Erfassung des Versorgungsgebietes gemäß Patentanspruch 1 Rechnung getragen ist.

Durch die Ausgestaltung gemäß den Patentanspruch 3 wird in unterschiedlicher Weise erreicht, daß bei Vorliegen vor Erfassungsbereichen mit sowohl schwachem als auch starkem Verkehrsaufkommen eine vergleichmäßigte Belastung betroffener Basisstationen erzielt wird.

Bei der Ausgestaltung des Anspruchs 4 ist das an sich bekannte Antennendiversity angewendet.

Nachstehend wird die Erfindung anhand eines Ausführungsbeispiels unter Bezugnahme auf eine Zeichnung näher erläutert.

In der Zeichnung zeigen:
Figur 1 ein Ausführungsbeispiel der Antennenanordnung und der zugehörigen Einrichtungen der zentralen Funkstelle eines Funkkommunikationssystems.
Figur 2 eine andere Darstellung der Antennenanordnung alleine zur Veranschaulichung der Schieflastunempfindlichkeit.

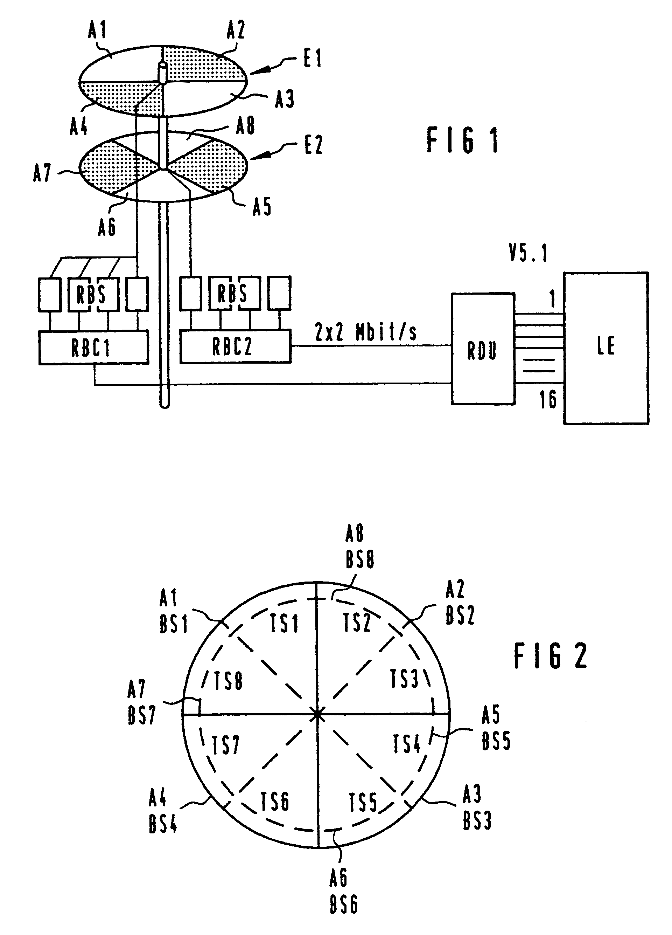

In der Figur 1, ist eine zentrale Funkstelle eines Funkkommunikationssystems dargestellt, die ortsfest angeordnet ist und mit einer Vielzahl von nicht dargestellten peripheren Funkstellen in Funkverbindung treten kann. Eine solche zentrale Funkstelle kann Bestandteil eines Schnurlossystems, eines Telepointsystems, eines RLL-Systems (Radio Local Loop) oder eines zellularen Mobilfunksystems sein. Bei den peripheren Funkstellen wird es sich jedoch vorzugsweise um stationäre Funkstellen handeln.

Am Ort der zentralen Funkstelle sind im vorliegenden Fall acht Antennen A1 bis A8 in zwei Gruppen von jeweils vier Antennen angeordnet, die zwei Ebenen E1 und E2 einnehmen. Wie die Figur zeigt, weist jede der Antennen einen Erfassungsbereich von 90° auf, wobei die jeweils vier Antennen einer Ebene insgesamt einen Erfassungsbereich von 360° abdecken.

Wie die Figur 1 ferner zeigt, sind die Antennen der beiden Ebenen E1 und E2 um 45° gegeneinander verdreht.

Für eine solche Anordnung mit in übereinanderliegenden konzentrischen Ebenen angeordneten Antennen gilt allgemein, daß die Antennen in m Gruppen von n Antennen mit gleichem Erfassungssektor zusammengefaßt sind und dabei je Gruppe ein Versorgungsgebiet von 360° erfassen, und daß die Erfassungssektorgrenzen von Ebene zu Ebene um 360°/(n · m) verdreht sind. Es entstehen hiermit n · m Teilsektoren der Breite 360°/(n ·m), die von m jeweils einer anderen der Ebenen angehörenden Antennen erfaßt werden.

Für die peripheren Funkstellen bedeutet dies, daß sie mindestens von zwei Antennen erfaßt werden.

Jeder der Antennen A1 bis A8 der Ebenen E1 und E2 ist eine Basisstation RBS zugeordnet. Im dargestellten Fall sind die Basisstationen RBS jeder Ebene durch einen Multiplexer RBC1 bis RBC2 zusammengefaßt. Zwischen diesen Multiplexern und der zentralen Steuerung RDU des Funkkommunikationssystems bestehen zwei Übertragungsstrecken mit einer Übertragungsbitrate von beispielsweise jeweils 2 Mbit/s, die in Lastteilung arbeiten. Bei diesen Übertragungsstrecken kann es sich um Funkstrecken, Lichtleiterstrecken und in Fällen, in denen nur relativ kurze Entfernungen bis zu einer Ortsvermittlungsstelle LE des Fernmeldenetzes zu überbrücken sind, auch um Kupferleitungsstrecken handeln. Zwischen der erwähnten zentralen Steuerung RDU des Funkkommunikationssystems und der Ortsvermittlungsstelle LE besteht ein Kupferleitungsbündel.

Aufgrund der Steuermechanismen der zentralen Steuerung RDU ist sichergestellt, daß jede periphere Funkstelle wahlweise über eine Basisstation, die der einen oder der anderen Antennenebene zugehörig ist, bedient werden kann.

In der Figur 2 sind die acht Antennen A1 bis A8 der beiden Antennenebenen der in Figur 1 dargestellten Antennenanordnung in etwas anderer Weise dargestellt. Man erkennt aus dieser Darstellung, daß durch die Antennenanordnung acht Teilsektoren TS1 bis TS8 entstehen, die jeweils von zwei Antennen erfaßt werden, so daß die im Bereich dieser Teilsektoren liegenden dezentralen Funkstellen von zwei betreffenden den Antennen zugeordneten Basisstationen BS1 bis BS8 bedient werden können. So sind bespielsweise für die im Teilsektor TS1 liegenden dezentralen Funkstellen die Basisstationen BS1 und BS8 und für die im Teilsektor TS2 liegenden dezentralen Funkstellen die Basisstationen BS2 und BS5 erreichbar.

Betrachtet man beispielsweise die Nordhälfte und die Südhälfte des Versorgungsgebietes, so erkennt man, daß bei dieser Anordnung eine unsymmetrische Schieflast bis zum Verhältnis von 5 zu 3 bzw. 3 zu 5 verarbeitet werden kann, indem dezentrale Funkstellen der Nordhälfte fünf Basisstationen, nämlich die Basisstation BS1, BS2, BS7, BS8 und BS5 voll auslasten können und dabei für die peripheren Funkstellen in der Südhälfte noch drei Basisstationen zur ausschließlichen Belastung verbleiben, nämlich die Basisstation BS6, BS3 und BS4.

Entsprechende Überlegungen lassen sich natürlich auch für jede andere Zweiteilung des Versorgungsgebietes anstellen, die mit in der Figur dargestellten Sektorgrenzen zusammenfällt.

Den peripheren Funkstellen stehen bei einer Bedienung durch eine einzige Basisstation eine Anzahl von durch Zeitmultiplexausnutzung einer Trägerfrequenz gebildete Funkkanäle zur Verfügung, die von der Ausstattung der Basisstation abhängt. Das Zusammenwirken von peripherer Funkstelle und Basisstation der zentralen Funkstelle ist dabei so, daß auch während bestehender Verbindungen stets auf denjenigen Funkkanal übergewechselt wird, der die momentan besten Übertragungsbedingungen bietet. Gemäß einer Ausgestaltung der Erfindung erfolgt das Zusammenwirken zwischen peripherer Funkstelle und zentraler Funkstelle darüberhinaus derart, daß während bestehender Verbindungen auch ein Wechsel zwischen erreichbaren Basisstationen vorgenommen wird, um eine optimale Funkverbindung zu erreichen.

Gemäß einer anderen Ausgestaltung der Erfindung sind die Antennen der zentralen Funkstelle so ausgebildet, daß sie in der Mitte ihres Erfassungssektors eine größere Empfindlichkeit aufweisen, als an deren Rand. Hierdurch kann erreicht werden, daß bei einem Erfassungsbereich mit starkem Verkehrsaufkommen, an den ein Erfassungsbereich mit niedrigem Verkehrsaufkommen angrenzt, der aus dem Randbereich des Erfassungsbereichs mit starkem Verkehrsaufkommen stammende Verkehr bevorzugt über die im wesentlichen den Nachbarbereich geringen Verkehrsaufkommens erfassende Antenne abgewickelt wird. Die den erstgenannten Bereich erfassende Antenne bzw. die zugehörige Basisstation ist dadurch besser in der Lage das hohe Verkehrsaufkommen zu bewältigen.

Alternativ hierzu kann auch durch Steuerungsmaßnahmen verhindert werden, daß Verkehr aus verkehrsschwachen Gebieten Basisstationen belastet, die ein Gebiet mit sowohl starkem als auch schwachem Verkehrsaufkommen erfassen, indem solange als die Basisstation der ein Gebiet mit ausschließlich schwachem Verkehr abdeckenden Antenne noch Kanalkapazität zur Verfügung hat, dieser Verkehr ausschließlich über diese Basisstation abgewickelt wird. Hierzu ist von vorneherein in der Steuereinheit RBC der zentralen Funkstelle festgelegt, daß periphere Funkstellen, die im Überlappungsbereich der Antennen liegen, die ein solches Gebiet mit starkem und schwachem Verkehrsaufkommen und ein solches benachbartes Gebiet mit nur schwachem Verkehrsaufkommen abdecken, nur von der Basisstation gerufen werden können, die nur schwaches Verekehrsaufkommen zu bewältigen hat bzw. daß der Ruf solcher peripheren Funkstellen nur von dieser Basisstation akzeptiert wird.

## Patentansprüche

1. Fernmeldevermittlungsnetz, das zumindest in Teilbereichen ein Funkkommunikationssystem mit einer zentralen Funkstelle (RBS, RBC, RDU) und einer Mehrzahl von in einem Versorgungsgebiet verteilten peripheren Funkstellen umfaßt, wobei am Ort von Basisstationen (RBS) der zentralen Funkstelle mehrere jeweils nur einen Sektor des Versorgungsgebietes erfassende Antennen (A1 bis A8) angeordnet sind, und wobei aufgrund der Anzahl, des Erfassungssektors und der Ausrichtung der Antennen (A1 bis A8) erreicht ist, daß jede periphere Funkstelle des Versorgungsgebietes mindestens von zwei Antennen erfaßt wird und daß jeder Antenne eine einzige Basisstation zugeordnet ist, **dadurch gekennzeichnet, daß** durch die Steuerung (RDU) der zentralen Funkstelle jeder peripheren Funkstelle derart selektiv jede sie erfassende Antenne mit ihrer zugehörigen Basisstation zugeordnet werden kann, daß bei Vorliegen von durch die Antennen erfassenden Erfassungsbereichen mit sowohl schwachem als auch starkem Verkehrsaufkommen eine nahezu gleichmäßige Verkehrsbelastung betroffener Basisstationen erzielt wird.

2. Fernmeldevermittlungsnetz nach Anspruch 1, **dadurch gekennzeichnet, daß** die Antennen (A1 bis A8) in m gleich große jeweils ein Versorgungsgebiet von 360° erfassende Gruppen von n Antennen mit gleichem Erfassungssektor zusammengefaßt sind, daß die Gruppen von Antennen in unterschiedlichen konzentrischen Ebenene (E1, E2) angeordnet sind, und daß die Erfassungssektorgrenzen von Ebene zu E-bene um 360°/ (n· m) verdreht sind, so daß n · m Teilsektoren der Breite 360°/(n · m) entstehen, die von m jeweils einer anderen Ebenen angehörenden Antenne erfaßt werden.

3. Fernmeldevermittlungsnetz einem der vorhergehenden Ansprüche, **dadurch gekennzeichnet, daß** durch die Steuerung (RDU) der zentralen Funkstelle bewirkt ist, daß periphere Funkstellen, die im Überlappungsbereich der Antennen liegen, die einen Erfassungsbereich mit starkem und schwachem Verkehrsaufkommen und zum Teil einen benachbarten Erfassungsbereich mit nur schwachem Verkehrsaufkommen abdecken, nur von der Basisstation gerufen werden können, die nur schwaches Verkehrsaufkommen zu bewältigen hat, und/oder daß von solchen peripheren Funkstellen kommende Rufe nur von dieser Basisstation akzeptiert werden können.

4. Fernmeldevermittlungsnetz nach einem der vorhergehenden Ansprüche, **dadurch gekennzeichnet, daß** jede Sektorantenne zweifach in einer räumlichen Beabstandung vorgesehen ist und daß immer diejenige der beiden Sektorantennen wirksam geschaltet wird, die die höhere Funkfeldstärke abgibt.

## Claims

1. Radio communication network, comprising at least in some areas it covers a radio communication system with a central broadcast station (RBS, RBC, RDU) and several peripheral broadcast stations distributed within a supply region, whereby several antennas (A1 to A8), each of which covers only a sector of the supply region, are located on the site of base stations (RBS) of the central broadcast station, and whereby, due to the number, the coverage sectors and the configuration of the antennas (A1 to A8), it is possible for each peripheral broadcast station of the supply region to be covered by at least two antennas, and for each antenna to be allocated to a single base station, **characterized in that** each peripheral broadcast station can be selectively allocated by the control unit (RDU) of the central broadcast station to each antenna covering it, with its corresponding base station, such that - where the antennas cover areas with both heavy and light traffic volume - virtually equal traffic loading of the affected base stations is achieved.

2. Radio communication network according to Claim 1, **characterized in that** the antennas (A1 to A8) are combined into m groups of n antennas with the same coverage sector, whereby each of the said groups covers a supply region of 360°, such that the groups of antennas are arranged at different concentric levels (E1, E2), and such that the coverage sector boundaries are rotated by 360° /(n · m) from one level to the other, resulting in n · m partial sectors of breadth 360°/(n · m), which are covered by m antennas each belonging to another of the levels.

3. Radio communication network according to one of the above claims, **characterized in that** the control unit (RDU) of the central broadcast station exercises control such that peripheral broadcast stations located in the area of overlap between the antennas covering an area with heavy and light traffic volume and part of an adjacent area with only light traffic volume, can only be called by the base station that has only light traffic volume to deal with, and/or such that calls coming from such peripheral broadcast stations can only accepted by this base station.

4. Radio communication network according to one of the above claims, **characterized in that** each sector antenna is provided twice at a spatial interval, and **in that**, of the two sector antennas, the one producing the higher radio field strength is always active.

## Revendications

1. Réseau de télécommunication, qui comprend au moins dans des zones partielles un système de radio-communications ayant une station radio (RBS, RBC, RDU) centrale et une pluralité de stations radio périphériques réparties dans une zone de diffusion, plusieurs antennes (A1 à A8) ne détectant chacune qu'un secteur de la zone de diffusion étant disposées à l'emplacement de stations (RBS) de base de la station radio centrale, et, étant obtenue que, sur la base du nombre, du secteur de détection et de l'orientation des antennes (A1 à A8), chaque station radio périphérique de la zone de diffusion est détectée par au moins deux antennes et qu'il est affecté à chaque antenne une seule station de base, **caractérisé en ce qu'**il peut être affecté par la commande (RDU) de la station radio centrale à chaque station radio périphérique de manière sélective chaque antenne qui la détecte avec sa station de base associée de telle manière que, en présence de zones de détection, détectant par les antennes, un volume de trafic aussi bien grand que petit, on obtient une charge de trafic à peu près homogène des stations de base concernées.

2. Réseau de télécommunication suivant la revendication 1, **caractérisé en ce que** les antennes (A1 à A8) sont réunies en m groupes de même dimension, détectant chacun une zone de diffusion de 360°, de n antennes à même secteur de détection, **en ce que** les groupes d'antennes sont disposés à des niveaux (E1, E2) concentriques différents et **en ce que** les limites de secteurs de détection sont tournés de 360°/(n.m) de niveau à niveau, si bien qu'il est créé n.m sous-secteurs de largeur 360°/(n.m) qui sont détectés par m antennes appartenant chacune à un autre niveau.

3. Réseau de télécommunication suivant l'une quelconque des revendications précédentes, **caractérisé en ce que** il est provoqué par la commande (RDU) de la station radio centrale que des stations radio périphériques qui se trouvent dans la zone de chevauchement des antennes, et qui recouvrent une zone de détection à volume de trafic grand et petit et en partie une zone de détection voisine à volume de trafic seulement petit, ne peuvent être appelés que par la station de base qui n'a à maîtriser qu'un petit volume de trafic et/ou que des appels venant de stations radio périphériques de ce genre ne peuvent être acceptés que par cette station de base.

4. Réseau de télécommunication suivant l'une quelconque des revendications précédentes, **caractérisé en ce que** chaque antenne de secteur est prévue deux fois avec un éloignement dans l'espace et **en ce que** celle des deux antennes de secteur qui fournit la plus grande intensité de champ hertzien est toujours branchée de manière active.
